# FASCICULE DE BREVET EUROPEEN

(11) **EP 4 355 542 B1**
(45) Date de publication et mention de la délivrance du brevet: **06.08.2025**
(21) Numéro de dépôt: 22735541.9
(22) Date de dépôt: 06.06.2022
(51) Int. Cl.: B28B 1/26, B28B 23/00, C04B 35/80, B01D 71/02, B28B 1/00, B01D 71/04, B01D 67/00, B01D 69/10, B01D 69/14, C04B 35/117, C04B 35/14, C04B 35/18, C04B 35/185, C04B 35/447, C04B 35/488, C04B 35/565, C04B 35/58, C04B 35/587

(54) **PROCEDE D'INJECTION DE POUDRES CERAMIQUES AVEC FILTRE CREE IN SITU DANS LA PREFORME FIBREUSE**
VERFAHREN ZUM EINSPRITZEN VON KERAMIKPULVERN MIT IN-SITU ERZEUGTEM FILTER IN DIE FASERVORFORM
METHOD FOR INJECTING CERAMIC POWDERS WITH FILTER CREATED IN SITU IN THE FIBROUS PREFORM

(30) Priorité: 15.06.2021 FR 2106297
(43) Date de publication de la demande: 24.04.2024
(73) Titulaire: Safran Ceramics, 33185 Le Haillan (FR)
(72) Inventeur: MOCAER, Didier, Yves, Georges, 77550 MOISSY-CRAMAYEL (FR); LESIZZA, Emilie, 77550 MOISSY-CRAMAYEL (FR)
(74) Mandataire: Cabinet Beau de Loménie
(86) Numéro de dépôt international: PCT/FR2022/051072
(87) Numéro de publication internationale: WO 2022/263741

(56) Documents cités:
- WO-A1-2016/102839
- WO-A1-2019/058069
- WO-A1-2019/129983
- US-A1- 2011 111 211

## Description

### Domaine Technique

La présente invention concerne un procédé d'injection de particules céramiques dans une texture fibreuse pour la fabrication d'une pièce en matériau composite de type Oxyde/Oxyde ou à matrice céramique (CMC), c'est-à-dire comportant un renfort fibreux formé à partir de fibres en matériau céramique réfractaire densifié par une matrice également en matériau céramique réfractaire.

### Technique antérieure

La fabrication de pièces en matériau composite à matrice céramique de type Oxyde/Oxyde ou SiC/SiC par injection comprend généralement une étape d'imprégnation d'une texture fibreuse par une suspension chargée, par exemple de particules d'alumine dans le cas d'un CMC type Oxyde/Oxyde ou de particules de carbure de silicium (SiC) dans le cas d'un CMC type SiC/SiC. L'étape d'imprégnation est réalisée par injection sous pression d'une suspension chargée au sein de la texture fibreuse (procédé STM pour « Slurry Transfer Molding »). Dans un tel cas, il faut drainer ou filtrer la phase liquide de la suspension afin d'obtenir un remplissage optimal des porosités résiduelles présentes dans la texture fibreuse avec les charges solides. Un tel procédé est notamment décrit dans le document WO 2016/102839. L'utilisation d'un élément filtrant interposé entre la texture fibreuse et la partie du moule sur laquelle le solvant de la suspension est évacué est, par conséquent, nécessaire. L'élément de filtration peut être constitué d'une pièce rigide en matériau poreux qui doit être détaché de la texture fibreuse lors du démoulage de celle-ci après injection de la suspension chargée et filtration du solvant.

L'utilisation d'un tel élément filtrant peut poser des difficultés. En effet, son retrait de la texture fibreuse peut s'avérer délicat et entraîner une dégradation de la texture fibreuse injectée. En outre, un tel élément filtrant étant rigide, il s'adapte difficilement à des géométries de pièces complexes. Pour résoudre ces problématiques, il peut être nécessaire de remplacer la pièce rigide en matériau poreux par une strate de filtration, comprenant une structure fibreuse partiellement densifiée, qui fera partie intégrante de la pièce en matériau composite finale. Une telle strate de filtration est notamment décrite dans le document WO 2019/129983 qui divulgue un procédé d'injection de particules céramiques dans une texture fibreuse comprenant les étapes suivantes :
- le placement d'une texture fibreuse dans un moule, la texture fibreuse étant interposée entre un ou plusieurs premiers ports et un ou plusieurs deuxièmes ports,
- l'injection par le ou les deuxièmes ports d'une barbotine dans la texture fibreuse, la barbotine comprenant une poudre de particules céramiques réfractaires de granulométrie inférieure à la taille des interstices du réseau poral de la texture fibreuse,
- le drainage à travers la couche de filtration de la phase liquide de la barbotine ayant traversé la texture fibreuse et rétention de la poudre de particules céramiques réfractaires à l'intérieur de ladite texture fibreuse par la couche de filtration de manière à obtenir une préforme fibreuse comprenant au moins la texture fibreuse chargée de particules céramiques réfractaires et la couche de filtration, la phase liquide de la barbotine étant évacuée par le ou les premiers ports.

Cependant, l'utilisation d'une strate de filtration présente encore des désavantages. En effet, la strate de filtration comprend une structure fibreuse, qui doit être partiellement densifiée afin de former dans la strate un réseau de porosité d'une taille déterminée précise, de sorte à laisser passer le solvant de la suspension tout en retenant les particules de céramique réfractaires. Ainsi, la strate de filtration doit être fabriquée et traitée avant de pouvoir être déposée dans le moule, ajoutant des étapes supplémentaires au procédé d'injection.

### Exposé de l'invention

La présente invention a pour but de remédier aux inconvénients précités et de proposer une solution qui permet de faciliter la réalisation par injection de pièces en matériau composite à matrice céramique (CMC), oxyde, carbure ou base carbone par injection d'une suspension chargée dans une texture fibreuse.

A cet effet, l'invention propose un procédé d'injection de particules céramiques dans une texture fibreuse comprenant les étapes suivantes :
- le placement d'une texture fibreuse dans un moule, la texture fibreuse étant interposée entre un ou plusieurs premiers ports et un ou plusieurs deuxièmes ports,
- l'injection par le ou les premiers ports d'une première suspension comprenant une poudre de particules de filtration présentant une granulométrie supérieure à la taille des interstices du réseau poral de la texture fibreuse,
- le drainage de la phase liquide de la première suspension par la texture fibreuse, évacuation de ladite phase liquide par le ou les deuxièmes ports et rétention des particules de filtration par la texture fibreuse de manière à former une couche de filtration entre ladite texture fibreuse et le ou les premiers ports,
- l'injection par le ou les deuxièmes ports d'une deuxième suspension dans la texture fibreuse, la deuxième suspension comprenant une poudre de particules céramiques réfractaires de granulométrie inférieure à la taille des interstices du réseau poral de la texture fibreuse,
- le drainage à travers la couche de filtration de la phase liquide de la deuxième suspension ayant traversé la texture fibreuse et rétention de la poudre de particules céramiques réfractaires à l'intérieur de ladite texture fibreuse par la couche de filtration de manière à obtenir une préforme fibreuse comprenant au moins la texture fibreuse chargée de particules céramiques réfractaires et la couche de filtration, la phase liquide de la deuxième suspension étant évacuée par le ou les premiers ports.

Ainsi, grâce à la réalisation d'une couche de filtration faisant partie intégrante de la pièce en matériau composite finale, on s'affranchit du problème du retrait d'un élément de filtration et on améliore fortement l'état de surface du côté filtre de la pièce. De plus, la fabrication du filtre est simplifiée par rapport aux strates de filtration utilisées dans l'art antérieur, l'interface filtrante étant formée à l'intérieur même du moule. On évite ainsi les étapes préalables nécessaires à la fabrication d'une texture fibreuse partiellement densifiée et les difficultés inhérentes à la réalisation d'un réseau de porosité d'une taille précise. Les opérations de mise en place de la strate de filtration sont également supprimées.

Selon une caractéristique particulière du procédé de l'invention, la poudre de la première suspension est un précurseur de céramique ou de verre.

Selon une autre caractéristique particulière du procédé de l'invention, la couche de filtration présente une épaisseur moyenne comprise entre 100 µm et 200 µm.

Selon une autre caractéristique particulière du procédé de l'invention, la taille des particules de la deuxième suspension est en moyenne 5 à 15 fois plus petite que la moyenne de la taille des interstices du réseau poral de la texture fibreuse.

Selon une autre caractéristique particulière du procédé de l'invention, les particules de la deuxième suspension sont en un matériau choisi parmi : l'alumine, la mullite, la silice, un aluminosilicate, un aluminophosphate, la zircone, un carbure, un borure, un siliciure et un nitrure ou un mélange de plusieurs de ces matériaux.

Selon une autre caractéristique particulière du procédé de l'invention, dans lequel la texture fibreuse comprend une structure fibreuse obtenue par tissage bidimensionnel, ou tissage tridimensionnel ou multicouche, ou placement automatique de fibres unidirectionnelles.

Selon une autre caractéristique particulière du procédé de l'invention, les fils de la texture fibreuse sont formés de fibres constituées d'un ou plusieurs des matériaux suivants : l'alumine, la mullite, la silice, un aluminosilicate, un borosilicate, du carbure de silicium et du carbone.

Selon une autre caractéristique particulière du procédé de l'invention, le moule présente une géométrie de révolution annulaire ou tronconique, la texture fibreuse étant conformée suivant une géométrie de révolution annulaire ou tronconique lors de son placement dans le moule.

### Brève description des dessins

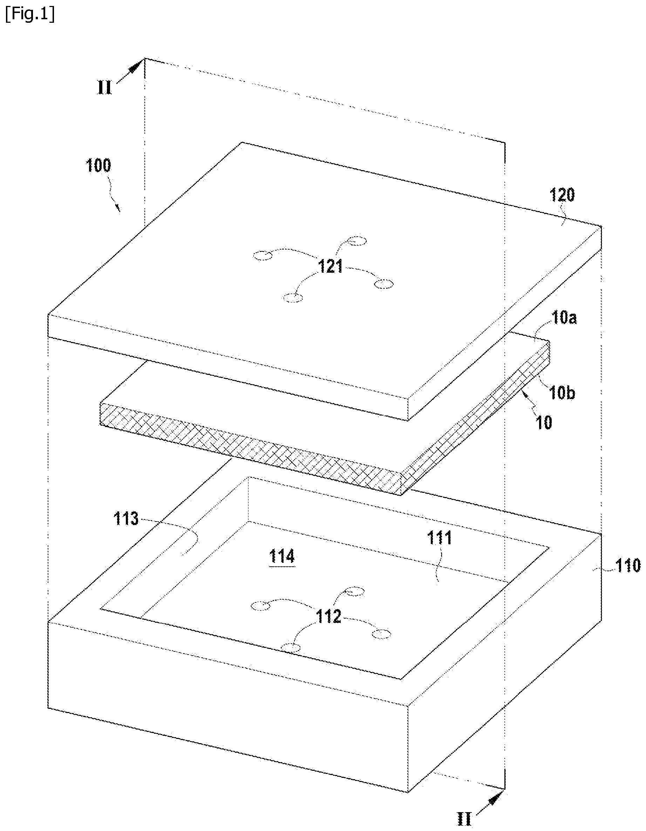

[Fig. 1] La figure 1 est une vue schématique en perspective éclatée d'un outillage conformément à un mode de réalisation de l'invention,

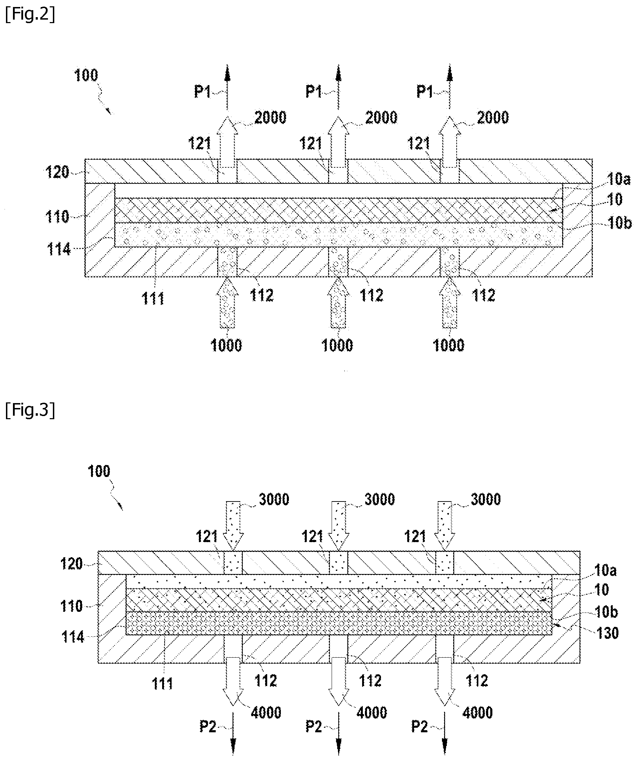

[Fig. 2] La figure 2 est une vue schématique en coupe montrant l'outillage de la figure 1 fermé avec une texture fibreuse positionnée dans celui-ci, et montrant la formation d'une couche de filtration par injection d'une première suspension chargée en particules de filtration présentant une granulométrie supérieure à la taille des interstices du réseau poral de la texture fibreuse,
[Fig. 3] La figure 3 est une vue schématique en coupe montrant l'outillage de la figure 1 fermé avec une texture fibreuse et une couche de filtration positionnées dans celui-ci, et montrant l'imprégnation de la texture fibreuse avec une deuxième suspension chargée en particules présentant une granulométrie inférieure à la taille des interstices du réseau poral de la texture fibreuse.

### Description des modes de réalisation

La texture fibreuse a été réalisée de façon connue par tissage bidimensionnel ou par tissage tridimensionnel.

Par « tissage bidimensionnel », on entend ici un mode de tissage classique pas lequel chaque fil de trame passe d'un côté à l'autre de fils d'une seule couche de chaîne ou inversement. Le procédé de l'invention est particulièrement adapté pour permettre l'introduction d'une suspension chargée dans des textures fibreuses 2D, à savoir des textures obtenues par empilement de strates ou plis 2D, d'épaisseur importante, c'est-à-dire des structures fibreuses 2D ayant une épaisseur d'au moins 0,5 mm, de préférence au moins 1 mm.

Par « tissage tridimensionnel » ou « tissage 3D » ou encore « tissage multicouche », on entend ici un mode de tissage par lequel certains au moins des fils de trame lient des fils de chaîne sur plusieurs couches de fils de chaîne ou inversement suivant un tissage correspondant à une armure de tissage qui peut être notamment choisie parmi une des armures suivantes : interlock, multi-toile, multi-satin et multi-sergé.

Par « armure ou tissu interlock », on entend ici une armure de tissage 3D dont chaque couche de fils de chaîne lie plusieurs couches de fils de trame avec tous les fils de la même colonne de chaîne ayant le même mouvement dans le plan de l'armure.

Par « armure ou tissu multi-toile », on désigne ici un tissage 3D avec plusieurs couches de fils de trame dont l'armure de base de chaque couche est équivalente à une armure de type toile classique mais avec certains points de l'armure qui lient les couches de fils de trame entre elles.

Par « armure ou tissu multi-satin », on désigne ici un tissage 3D avec plusieurs couches de fils de trame dont l'armure de base de chaque couche est équivalente à une armure de type satin classique mais avec certains points de l'armure qui lient les couches de fils de trame entre elles.

Par « armure ou tissu multi-sergé », on désigne ici un tissage 3D avec plusieurs couches de fils de trame dont l'armure de base de chaque couche est équivalente à une armure de type de type sergé classique mais avec certains points de l'armure qui lient les couches de fils de trame entre elles.

Les textures 3D présentent une géométrie complexe dans laquelle il est difficile d'introduire et de répartir de manière homogène des particules solides en suspension. Le procédé de l'invention est également très bien adapté pour l'introduction d'une suspension chargée dans des textures fibreuses tissées 3D.

La texture fibreuse peut également avoir été réalisée à partir de couches ou nappes unidirectionnelles (UD).

Les fils utilisés pour tisser la texture fibreuse destinée à former le renfort fibreux de la pièce en matériau composite peuvent être notamment formés de fibres céramiques réfractaires constituées d'un des matériaux suivants : l'alumine, la mullite, la silice, un aluminosilicate, un borosilicate, du carbure de silicium, du carbone ou d'un mélange de plusieurs de ces matériaux.

Selon un premier exemple illustré sur les figures 1-3, une texture fibreuse 10 est placée dans un outillage 100. Dans l'exemple décrit ici, la texture fibreuse 10 est réalisée suivant une des techniques définies ci-avant (empilement strates UD ou 2D ou tissage 3D) avec des fils d'alumine Nextel 610TM. La texture fibreuse 10 est ici destinée à former le renfort fibreux d'une pièce en matériau composite de type Oxyde/Oxyde.

L'outillage 100 comprend un moule 110 et un contre-moule 120. Le moule 110 comprend un fond 111 muni d'une pluralité de ports 112. Le moule 110 comprend également une paroi latérale 113 qui forme avec le fond 111 une cavité de moulage 114. Dans l'exemple illustré, l'outillage 100 dans lequel la texture fibreuse 10 est présente est fermé dans sa partie inférieure par le moule 110 et est fermé dans sa partie supérieure par le contre-moule 120 formant un couvercle refermant l'outillage 100. Le moule 110 et le contre-moule 120 servent à dimensionner la préforme et donc la pièce à obtenir ainsi qu'à ajuster le taux de fibres dans la pièce à obtenir.

Le moule 110 comporte une pluralité de ports 112 débouchant dans des zones différentes de la cavité de moulage 114, au travers desquels une première suspension chargée de particules de filtration présentant une granulométrie supérieure à la taille des interstices de la texture fibreuse 10 est notamment destinée à être injectée afin de former une couche de filtration 130 entre le fond du moule 111 et la deuxième face 10b de la texture fibreuse. Toutefois, on ne sort pas du cadre de l'invention lorsque le moule comprend un unique port. Dans le cas de plusieurs ports, la première suspension peut être injectée à travers seulement une partie des ports du moule, pour réserver l'autre partie des ports à l'évacuation d'une deuxième suspension comme détaillé dans la suite de la description.

Le contre-moule 120 comporte, quant à lui, une pluralité de ports 121 au travers desquels le solvant de la première suspension sera évacué après avoir traversé la texture fibreuse 10. En outre, une deuxième suspension chargée de particules céramiques réfractaires est destinée à être injectée au travers de la pluralité de ports 121 du contre-moule 120 afin de pénétrer dans les porosités de la texture fibreuse 10 au travers de la première face 10a de la texture fibreuse 10. Dans l'exemple illustré sur les figures 1-3, le solvant de la première suspension est évacué au travers de tous les ports 121 du contre-moule 120 et la deuxième suspension est injectée au travers de tous les ports 121 du contre-moule 120. On ne sort pas du cadre de l'invention lorsque le contre-moule comprend un unique port. Dans le cas de plusieurs ports, le solvant de la première suspension peut être évacué à travers seulement une partie des ports du contre-moule, pour réserver l'autre partie des ports du contre-moule à l'injection de la deuxième suspension.

Le solvant de la deuxième suspension est destiné à être évacué au travers de la pluralité de ports 112 du moule 110. Dans l'exemple illustré sur les figures 1-3, la totalité des ports 112 du moule 110 a également servi précédemment à l'injection de la première suspension. Dans le cas où le moule comprend plusieurs ports, le solvant de la deuxième suspension peut être évacué à travers seulement une partie des ports du moule, l'autre partie des ports du moule ayant été réservée à l'injection de la première suspension.

Conformément à l'invention, une couche de filtration 130 est interposée entre la texture fibreuse 10 et le fond du moule 111. La couche de filtration 130 est formée suite à l'injection de la première suspension chargée de particules de filtration présentant granulométrie supérieure à la taille des interstices de la texture fibreuse 10, la phase liquide de ladite suspension étant drainée par la texture fibreuse 10 puis évacuée par les ports 121 du contre-moule 120, les particules de filtration restant ainsi interposée entre la texture fibreuse 10 et le fond du moule 111. Dans l'exemple décrit ici, les particules de filtration sont des précurseurs de céramique ou de verre. La phase liquide de la suspension peut par exemple être de l'eau.

Les flèches 1000 représentent le mouvement de la première suspension injectée dans le moule 110. Les flèches 2000 représentent quant à elles le mouvement du milieu ou phase liquide de la suspension drainé par la texture fibreuse 10 comme illustré sur la figure 2.

La préforme peut être maintenue en compression dans le moule et peut épouser complètement les parois du moule. En outre, la préforme constitue un réseau perméable aux phases liquides des première et deuxième injections. Ainsi, il n'y a pas de risque de déformation de la structure fibreuse sous l'effet de la pression de la première ou de la deuxième injection.

Un pompage P1 peut, en outre, être réalisé au niveau des ports 121 du contre-moule 120 durant le drainage, par exemple au moyen d'une pompe à vide primaire. La réalisation d'un tel pompage permet d'améliorer le drainage et de sécher plus rapidement la couche filtrante 130.

A titre d'exemple, la couche de filtration 130 présente une épaisseur moyenne comprise entre 100 µm et 200 µm.

La couche de filtration 130 permet le drainage à l'extérieur de la texture fibreuse 10 de la phase liquide de la deuxième suspension, comprenant une poudre de particules céramiques réfractaires présentant une granulométrie inférieure à la taille des interstices de la texture fibreuse 10, et l'évacuation de ladite phase liquide par les ports 112 du moule 110 du fait de l'application d'un gradient de pression entre les ports du moule 112 et les ports du contre-moule 121.

Avant l'injection de la deuxième suspension chargée des particules présentant la granulométrie la plus faible dans la texture fibreuse 10, une pression de compaction permettant de compacter la texture fibreuse 10 entre le moule 110 et le contre-moule 120 peut être appliqué par serrage du moule 110 ou au moyen d'une presse, cette pression de compaction pouvant être maintenue durant l'injection. La pression de compaction peut être également exercée par un liquide de compaction via une membrane comme dans le procédé Polyflex.

En variante, la pression de compaction peut être appliquée après le début de l'injection de la deuxième suspension et peut ensuite être maintenue. L'application d'une pression de compactage peut permettre de compacter la texture afin d'aider au drainage du liquide par la couche de filtration et d'atteindre une épaisseur cible pour la préforme fibreuse sans endommager celle-ci.

Dans l'exemple décrit ici, la deuxième suspension chargée correspond à une phase liquide chargée en particules céramiques réfractaires. La figure 3 illustre la configuration obtenue durant l'injection d'une deuxième suspension chargée et le drainage du milieu liquide de celle-ci. La suspension a été injectée sous pression par les ports 121 du contre-moule 120 de manière à pénétrer dans la texture fibreuse 10 au travers de sa première face 10a. Les particules céramiques réfractaires présentes dans la suspension sont destinées à permettre la formation d'une matrice céramique réfractaire dans la porosité de la texture fibreuse 10. Cette matrice céramique réfractaire peut, dans un exemple de réalisation, être une matrice d'oxyde réfractaire.

La deuxième suspension peut par exemple être une suspension d'une poudre d'alumine dans de l'eau. La dimension particulaire moyenne (D50) de la poudre d'alumine peut être comprise entre 0,1 µm et 2 µm. La poudre d'alumine utilisée peut être une poudre d'alumine alpha.

Plus généralement, la deuxième suspension peut être une suspension comportant de particules céramiques réfractaires présentant une dimension particulaire en moyenne 5 à 15 fois plus petite que la moyenne de la taille des interstices du réseau poral de la texture fibreuse.

La teneur volumique en particules dans la suspension peut, avant l'injection, être comprise entre 5% et 50%. Les particules céramiques réfractaires peuvent comporter un matériau choisi parmi : l'alumine, la mullite, la silice, un aluminosilicate, un aluminophosphate, la zircone, un carbure, un borure, un siliciure et un nitrure ou un précurseur d'un ou plusieurs de ces matériaux. En fonction de leur composition de base, les particules céramiques réfractaires peuvent, en outre, être mélangées avec des particules d'alumine, de zircone, d'aluminosilicate, d'un oxyde de terre rare, de silicate de terre rare (lequel peut par exemple être utilisé dans les barrières environnementales ou thermiques) ou toute autre charge permettant de fonctionnaliser la pièce en matériau composite à obtenir comme le noir de carbone, le graphite ou le carbure de silicium.

La phase liquide de la deuxième suspension peut, par exemple, comporter une phase aqueuse présentant un pH acide (i.e. un pH inférieur à 7) et/ou une phase alcoolique comportant par exemple de l'éthanol. La suspension peut comporter un acidifiant tel que de l'acide nitrique et le pH du milieu liquide peut par exemple être compris entre 1 et 5. La suspension peut, en outre, comporter un liant organique comme de l'alcool polyvinylique (PVA) lequel est notamment soluble dans l'eau.

Comme illustré sur la figure 3, les particules céramiques réfractaires sont présentes après injection de la deuxième suspension dans la porosité de la texture fibreuse 10. Les flèches 3000 représentent le mouvement de la suspension injectée dans la texture fibreuse 10. Les flèches 4000 représentent quant à elles le mouvement du milieu ou phase liquide de la suspension drainé par la couche de filtration 130 comme illustré sur la figure 3.

Le contre-moule 120 exerce une pression sur la texture fibreuse 10 pendant et après l'étape d'injection de la deuxième suspension.

Un pompage P2 peut, en outre, être réalisé au niveau des ports 112 du moule 110 durant le drainage, par exemple au moyen d'une pompe à vide primaire. La réalisation d'un tel pompage permet d'améliorer le drainage et de sécher plus rapidement la texture fibreuse 10.

Dans cette configuration, la couche de filtration 130 permet de retenir dans la texture fibreuse 10 les particules initialement présentes dans la deuxième suspension et que tout ou partie de ces particules se déposent par filtration dans la texture fibreuse 10.

Dans l'exemple présenté ici, le moule ne comprend pas de membrane. On ne sort bien entendu pas du cadre de l'invention si les injections des première et/ou deuxième suspensions sont réalisées sous membrane de manière bien connue, pour améliorer l'imprégnation de la texture fibreuse.

Une fois les étapes d'injection et de drainage effectuées, on obtient une préforme fibreuse comprenant la texture fibreuse 10 chargée de particules céramiques réfractaires et la couche de filtration 130 qui est liée à la texture fibreuse 10. L'adhésion entre la couche de filtration 130 et la texture fibreuse 10 est réalisée pendant l'injection de particules de céramiques réfractaires. De la matière se dépose entre la couche de filtration 130 et la texture fibreuse 10 et, grâce à la compaction, l'ensemble est solidaire. Le traitement thermique de frittage crée ensuite des pontages entre les particules qui complète l'adhésion.

La préforme obtenue est ensuite séchée puis démoulée, la préforme pouvant conserver après démoulage la forme adoptée après compaction entre le moule 110 et le contre-moule 120 grâce à la présence d'un liant dans la suspension de particules céramiques réfractaires tel que du PVA.

La préforme est ensuite soumise à un traitement thermique, ici un frittage, par exemple sous air à une température comprise entre 1000°C et 1200°C afin de pré-fritter les particules céramiques réfractaires et ainsi former une matrice céramique réfractaire dans la porosité de la texture fibreuse 10. On obtient alors une pièce en matériau composite Oxyde/Oxyde, munie d'une part d'un renfort fibreux présentant un taux volumique de matrice élevé avec une répartition homogène de la matrice céramique réfractaire dans tout le renfort fibreux, et munie d'autre part d'une surface recouverte d'une couche lisse de céramique ou de verre avec un excellent état de surface, issue de la couche de filtration 130.

Une pièce en matériau composite CMC autre que Oxyde/Oxyde peut être obtenue de la même façon en réalisant la texture fibreuse et la strate de filtration avec des fibres de carbure de silicium et/ou de carbone et en utilisant une deuxième suspension chargée de particules de carbure (par exemple de SiC), de borure (par exemple de TiB2), de siliciure (par exemple MoSi2) ou de nitrure (par exemple de Si3N4).

La deuxième suspension chargée injectée dans la texture fibreuse peut, en variante, comporter des particules d'un précurseur de céramique réfractaire, par exemple de type sol-gel ou polymérique. Dans ce cas, le traitement thermique comporte au moins une étape de transformation du précurseur de céramique réfractaire en un matériau céramique (étape dite de céramisation) suivi éventuellement d'une étape supplémentaire de frittage afin de densifier davantage la pièce en matériau composite.

## Revendications

1. Procédé d'injection de particules céramiques dans une texture fibreuse (10) comprenant les étapes suivantes :
- le placement d'une texture fibreuse (10) dans un moule (110), la texture fibreuse (10) étant interposée entre un ou plusieurs premiers ports (112) et un ou plusieurs deuxièmes ports (121),
- l'injection par le ou les premiers ports (112) d'une première suspension comprenant une poudre de particules de filtration présentant une granulométrie supérieure à la taille des interstices du réseau poral de la texture fibreuse (10),
- le drainage de la phase liquide de la première suspension par la texture fibreuse (10), évacuation de ladite phase liquide par le ou les deuxièmes ports (121) et rétention des particules de filtration par la texture fibreuse (10) de manière à former une couche de filtration (130) entre ladite texture fibreuse (10) et le ou les premiers ports (112),
- l'injection par le ou les deuxièmes ports (121) d'une deuxième suspension dans la texture fibreuse, la deuxième suspension comprenant une poudre de particules céramiques réfractaires de granulométrie inférieure à la taille des interstices du réseau poral de la texture fibreuse (10),
- le drainage à travers la couche de filtration (130) de la phase liquide de la deuxième suspension ayant traversé la texture fibreuse (10) et rétention de la poudre de particules céramiques réfractaires à l'intérieur de ladite texture fibreuse (10) par la couche de filtration (130) de manière à obtenir une préforme fibreuse comprenant au moins la texture fibreuse (10) chargée de particules céramiques réfractaires et la couche de filtration (130), la phase liquide de la deuxième suspension étant évacuée par le ou les premiers ports (112).

2. Procédé selon la revendication 1, dans lequel la poudre de la première suspension est un précurseur de céramique ou de verre.

3. Procédé selon la revendication 1 ou 2, dans lequel la couche de filtration (130) présente une épaisseur moyenne comprise entre 100 µm et 200 µm.

4. Procédé selon l'une quelconque des revendications 1 à 3, dans lequel la taille des particules de la deuxième suspension est en moyenne 5 à 15 fois plus petite que la moyenne de la taille des interstices du réseau poral de la texture fibreuse (10).

5. Procédé selon l'une quelconque des revendications 1 à 4, **caractérisé en ce que** les particules de la deuxième suspension sont en un matériau choisi parmi : l'alumine, la mullite, la silice, un aluminosilicate, un aluminophosphate, la zircone, un carbure, un borure, un siliciure et un nitrure ou un mélange de plusieurs de ces matériaux.

6. Procédé selon l'une quelconque des revendications 1 à 5, dans lequel la texture fibreuse (10) comprend une structure fibreuse obtenue par tissage bidimensionnel, ou tissage tridimensionnel ou multicouche, ou placement automatique de fibres unidirectionnelles.

7. Procédé selon l'une quelconque des revendications 1 à 6, **caractérisé en ce que** les fils de la texture fibreuse (10) sont formés de fibres constituées d'un ou plusieurs des matériaux suivants : l'alumine, la mullite, la silice, un aluminosilicate, un borosilicate, du carbure de silicium et du carbone.

8. Procédé selon l'une quelconque des revendications 1 à 7, dans lequel le moule (110) présente une géométrie de révolution annulaire ou tronconique, la texture fibreuse (10) étant conformée suivant une géométrie de révolution annulaire ou tronconique lors de son placement dans le moule (110).

9. Procédé de fabrication d'un matériau composite comprenant un procédé d'injection selon l'une quelconque des revendication 1 à 8, comprenant en outre un traitement thermique des particules céramiques réfractaires présentes dans la texture fibreuse (10) de la préforme afin de former une pièce en matériau composite comprenant au moins ladite texture fibreuse (10) densifiée par une matrice céramique réfractaire et la couche de filtration (130).

## Patentansprüche

1. Verfahren zum Einspritzen von Keramikpartikeln in eine fasrige Textur (10), umfassend die folgenden Schritte:
- Platzieren einer fasrigen Textur (10) in einer Form (110), wobei die fasrige Textur (10) zwischen einer oder mehreren ersten Öffnungen (112) und einer oder mehreren zweiten Öffnungen (121) eingefügt wird,
- Injizieren durch die oder die erste(n) Öffnung(en) (112) einer ersten Suspension, umfassend ein Pulver aus Filterpartikeln, die eine Korngröße aufweisen, die größer ist als die Größe der Zwischenräume des Porennetzes der fasrigen Textur (10),
- Ablassen der flüssigen Phase der ersten Suspension durch die fasrige Textur (10), Evakuieren der flüssigen Phase durch die oder die zweite(n) Öffnung(en) (121) und Zurückhalten der Filterpartikel durch die fasrige Textur (10), um eine Filterschicht (130) zwischen der fasrigen Textur (10) und der oder den ersten Öffnung(en) (112) zu bilden,
- Injizieren einer zweiten Suspension durch die oder die zweite(n) Öffnung(en) (121) in die fasrigen Textur, die zweite Suspension umfassend ein Pulver aus feuerfesten Keramikpartikeln mit einer Korngröße, die kleiner ist als die Größe der Zwischenräume des Porennetzes der fasrigen Textur (10),
- Ablassen, durch die Filterschicht (130), der flüssigen Phase der zweiten Suspension, die die fasrige Textur (10) durchquert hat, und Zurückhalten des Pulvers aus feuerfesten Keramikpartikeln im Inneren der fasrigen Textur (10) durch die Filterschicht (130), um einen fasrigen Vorformling zu erlangen, umfassend mindestens die fasrige Textur (10), die mit feuerfesten Keramikpartikel beladen ist, und die Filterschicht (130), wobei die flüssige Phase der zweiten Suspension durch die oder die erste(n) Öffnung(en) (112) abgelassen wird.

2. Verfahren nach Anspruch 1, wobei das Pulver der ersten Suspension ein Keramik- oder Glasvorläufer ist.

3. Verfahren nach Anspruch 1 oder 2, wobei die Filterschicht (130) eine mittlere Stärke zwischen 100 µm und 200 µm aufweist.

4. Verfahren nach einem der Ansprüche 1 bis 3, wobei die Partikelgröße der zweiten Suspension im Durchschnitt 5 bis 15 Mal kleiner ist als die durchschnittliche Größe der Zwischenräume des Porennetzes der fasrigen Textur (10).

5. Verfahren nach einem der Ansprüche 1 bis 4, **dadurch gekennzeichnet, dass** die Teilchen der zweiten Suspension aus einem Material sind, das ausgewählt ist aus: Aluminiumoxid, Mullit, Siliciumdioxid, einem Aluminosilikat, einem Aluminophosphat, Zirkoniumdioxid, einem Carbid, einem Borid, einem Silicid und einem Nitrid oder einem Gemisch aus mehreren dieser Materialien.

6. Verfahren nach einem der Ansprüche 1 bis 5, wobei die fasrige Textur (10) eine Faserstruktur umfasst, die durch zweidimensionales Weben oder dreidimensionales oder mehrschichtiges Weben oder automatisches Platzieren von unidirektionalen Fasern erlangt wird.

7. Verfahren nach einem der Ansprüche 1 bis 6, **dadurch gekennzeichnet, dass** die Fäden der fasrigen Textur (10) aus Fasern gebildet sind, die aus einem oder mehreren der folgenden Materialien gebildet sind: Aluminiumoxid, Mullit, Siliziumdioxid, einem Aluminosilikat, einem Borsilikat, Siliziumkarbid und Kohlenstoff.

8. Verfahren nach einem der Ansprüche 1 bis 7, wobei die Form (110) eine ringförmige oder kegelstumpfförmige Rotationsgeometrie aufweist, wobei die fasrige Textur (10) beim Platzieren in die Form (110) gemäß einer ringförmigen oder kegelstumpfförmigen Rotationsgeometrie geformt wird.

9. Herstellungsverfahren eines Verbundmaterials, umfassend ein Einspritzverfahren nach einem der Ansprüche 1 bis 8, ferner umfassend eine Wärmebehandlung der feuerfesten Keramikpartikel, die in der fasrigen Textur (10) des Vorformlings vorhandenen sind, um ein Werkstück aus Verbundmaterial zu bilden, umfassend mindestens die fasrige Textur (10), die durch eine feuerfeste Keramikmatrix verdichtet ist, und die Filterschicht (130).

## Claims

1. A method for injecting ceramic particles into a fibrous texture (10) comprising the following steps:
- placing a fibrous texture (10) in a mould (110), the fibrous texture (10) being interposed between one or more first ports (112) and one or more second ports (121),
- injecting through the first port(s) (112) a first suspension comprising a powder of filtration particles having a particle size greater than the size of the interstices of the pore network of the fibrous texture (10);
- draining the liquid phase of the first suspension by the fibrous texture (10), evacuating said liquid phase through the second port(s) (121) and retaining the filtration particles by the fibrous texture (10) so as to form a filtration layer 130 between said fibrous texture and the first port(s) (112),
- injecting a second suspension into the fibrous texture through the second port(s) (121), the second suspension comprising a powder of refractory ceramic particles with a particle size smaller than the size of the interstices of the pore network of the fibrous texture (10),
- draining through the filtration layer (130) the liquid phase of the second suspension having passed through the fibrous texture (10) and retaining refractory ceramic particle powder inside said fibrous texture (10) by the filtration layer (130) so as to obtain a fibrous preform comprising at least the fibrous texture (10) filled with refractory ceramic particles and the filtration layer (130), the liquid phase of the second suspension being evacuated through the first port(s) (112).

2. A method according claim 1, in which the powder of the first suspension is a ceramic or glass precursor.

3. A method according to claim 1 or 2 in which the filtration layer (130) has an average thickness comprised between 100 µm and 200 µm.

4. A method according to any one of claims 1 to 3, in which the size of the particles of the second suspension is, on average, 5 to 15 times smaller than the average size of the interstices of the pore network of the fibrous texture(10).

5. A method according to any one of claims 1 to 4, **characterized in that** the particles of the second suspension are made of a material chosen from: alumina, mullite, silica, an aluminosilicate, an aluminophosphate, zirconia, a carbide, a boride, a silicide and a nitride or a mixture of several of these materials.

6. A method according to any one of claims 1 to 5, in which the fibrous texture (10) comprises a fibrous structure obtained by two-dimensional weaving, or three-dimensional or multilayer weaving, or automatic placement of unidirectional fibres.

7. A method according to any one of claims 1 to 6, **characterized in that** the threads of the fibrous texture (10) are formed of fibres consisting of one or more of the following materials: alumina, mullite, silica, an aluminosilicate, a borosilicate, carbide silicon and carbon.

8. A method according to any one of claims 1 to 7, in which the mould (110) has an annular or frustoconical geometry of revolution, the fibrous texture (10) being shaped according to an annular or frustoconical geometry of revolution when placed in the mould (110).

9. A method of manufacturing a composite material comprising an injection method according to any one of claims 1 to 8, further comprising a heat treatment of the refractory ceramic particles present in the fibrous texture (10) of the preform in order to form a composite material part comprising at least said fibrous texture (10) densified by a refractory ceramic matrix and the filtration layer (130).
